# EUROPEAN PATENT SPECIFICATION

(11) **EP 3 955 041 B1**
(45) Date of publication and mention of the grant of the patent: **03.06.2026**
(21) Application number: 21185606.7
(22) Date of filing: 14.07.2021
(51) Int. Cl.: G02B 6/44, G02B 6/02

(54) **AIR-BLOWN OPTICAL FIBER CABLE WITH FLEXIBLE TUBES**
LUFTGEBLASENES FASEROPTISCHES KABEL MIT FLEXIBLEN SCHLÄUCHEN
CÂBLE DE FIBRE OPTIQUE INSTALLÉ PAR SOUFFLAGE D'AIR COMPRENANT DES TUBES FLEXIBLES

(30) Priority: 13.08.2020 CN 202010810380
(43) Date of publication of application: 16.02.2022
(73) Proprietor: Yangtze Optical Fibre and Cable Joint Stock Limited Company, East Lake High-tech Development Zone Wuhan Hubei 430073 (CN)
(72) Inventor: HU, Haifeng, Wuhan, Hubei, 430073 (CN); RUAN, Yunfang, Wuhan, Hubei, 430073 (CN); YANG, Xiangrong, Wuhan, Hubei, 430073 (CN); QI, Lin, Wuhan, Hubei, 430073 (CN); ZHENG, Lei, Wuhan, Hubei, 430073 (CN)
(74) Representative: Lorenz Seidler Gossel Part. mbB

(56) References cited:
- EP-A1- 2 312 359
- US-A1- 2002 136 511
- US-A1- 2007 274 647
- US-A1- 2010 092 139

## Description

### TECHNICAL FIELD

The present invention relates to an air-blown optical fiber cable with flexible tubes, and falls within the technical field of optical-electric transmission.

### BACKGROUND ART

An air-blown micro cable is an optical fiber cable that can be installed by means of air blowing. It has the advantages of high optical fiber density, small diameter, light weight and high air-blown installation efficiency, and is widely applied in a backbone network, a local area network, an access network, etc. The air-blown micro cable having a larger number of optical fibers is generally of a stranded structure. The cable core of the air blown micro cable is formed by means of SZ stranding a center strength member and loose tubes and then binding same by a wrapping yarn, and a sheath is then extrusion molded on the cable core. Loose tubes are made of a secondary coating material, the secondary coating material is PBT, and the elasticity modulus thereof is higher and is about 2200 MPa.

During the construction of the air-blown micro cable, when optical fibers need coiled reservation after splicing and splitting in a splice box or a distribution box, as for an existing air-blown micro cable, PBT loose tubes cannot be directly reserved in a coiled manner, because the modulus of the material used for the PBT loose tubes is greater whereas the space of the distribution box is smaller, and if the tubes are directly reserved in the coiled manner, the tubes would be bent and optical fibers would be damaged, affecting the transmission performance of the optical fibers. Hence, it is necessary to break the optical fibers, add flexible tube protection and then fuse the optical fibers for coiled reservation. If optical fibers are not broken and no flexible tube protection is added, tube kinking still easily occurs in use, resulting in the optical fibers being broken, thereby affecting the transmission performance of the optical fiber.

The optical fiber density affects a pipeline occupation fee and a construction efficiency, and therefore, increasing the optical fiber density is an industry development target. Under the condition of an unchanged fiber count, the method for reducing the diameter of an optical fiber cable mainly comprises reducing the diameter of an optical fiber, reducing the diameter of a tube and reducing the wall thickness of a sheath. However, reducing the diameter of the optical fiber and reducing the diameter of the tube would both bring about the problem of the increase of optical fiber attenuation, and the tubes are more easily bent.

US 2010/092139 A1 discloses a reduced-diameter, easy-access loose tube cable. US 2007/274647 A1 discloses a telecommunication optical cable having a highly reduced diameter.

### SUMMARY OF THE INVENTION

Aiming at the above-mentioned defects in the prior art, the technical problem to be solved by the present invention is to provide an air-blown optical fiber cable with flexible tubes. The cable has the advantages of high optical fiber density, small diameter, light weight, etc. Furthermore, the split loose tubes are easily bent but not broken, such that coiled reservation with a small radius by means of kinking can be realized, thereby improving the construction efficiency.

In order to solve the above-mentioned problems, the technical solution used in the present invention is a cable as defined in claims 1-5. Advantageous embodiments are defined in dependent claim 6.

The beneficial effects of the present invention lie in: 1. the optical fiber cable is simple in structure, and has a small diameter, light weight, high optical fiber density and great air-blown installation performance; 2. the loose tubes are made of the flexible coating material, which has great flexibility, is easily bent but not broken, almost reaching the minimum kink radius of the optical fiber without being bent, and can realize coiled reservation with a small kink radius in a distribution box, such that the split optical fibers that are reserved in a coiled manner can be better protected and there is no need to break the optical fibers, thereby greatly facilitating the splitting and splicing of the optical fibers, improving the construction efficiency; 3. the elasticity modulus of the flexible coating material is as defined in claims 1-5, and the tube material is flexible and is easily bent, thus the wall thickness can be smaller without the occurrence of bending, such that the reduction of the tube diameter and the increase of the optical fiber density are achieved, and meanwhile the loose tubes having certain strength can be ensured, thereby protecting the optical fibers in the loose tubes and preventing tube surfaces from having marks caused by the wrapping yarn; 4. the optical fiber is a bending-resistance single-mode optical fiber, which can further improve the bending performance of the present invention. In the present invention, by means of the preferred moduli of inner and outer coatings of the optical fibers and the preferred secondary coating material, the diameter of the optical fibers and the diameter of the tubes are reduced to the greatest extent, and meanwhile the optical fiber cable having excellent transmission performance at a temperature of -30°C to +70°C can also be ensured; 5. the outer sheath has higher strength and rigidity, so as to form an optical fiber cable structure that is hard outside and flexible inside, which can facilitate airblowing installation and has a great cable protection performance.

### BRIEF DESCRIPTION OF THE DRAWINGS

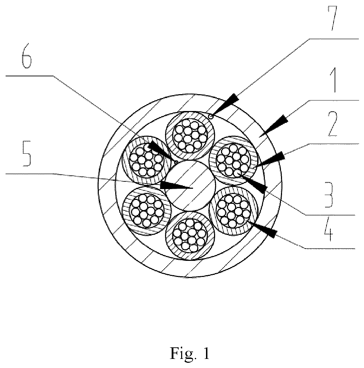

Figure 1 is a radial cross-sectional view of an embodiment of the present invention.

### DETAILED DESCRIPTION OF EMBODIMENTS

The present invention will be further described below in conjunction with the accompanying drawings and embodiments.

The embodiment of the present invention is as shown in figure 1. The embodiment comprises an outer sheath 1 and a cable core covered in the outer sheath. The cable core comprises a non-metallic central strength member 5 and loose tubes 2 that are stranded on the periphery of the central strength member. The loose tubes are bound by a wrapping yarn after SZ stranding. Optical fibers 3 are sheathed in the loose tubes, and the loose tubes are also filled with a water-blocking material 4. The water-blocking material is water-blocking powder or water-blocking factice. The loose tubes are formed by means of extrusion molding TPEE, TPU or TPV at a temperature of 200°C to 240°C, and the elasticity modulus of the tubes is as claimed in claims 1-5. The optical fiber 3 is a bending-resistance single-mode optical fiber, and the outer surface of the optical fiber is coated with inner and outer coatings, with the elasticity modulus of the inner coating being 0.8 MPa, and the elasticity modulus of the outer coating being 900 MPa (at a test temperature of 25°C). There are 12 or 24 optical fibers in each flexible tube. The occupying ratio of the optical fibers in the loose tubes goes beyond 50%. The loose tubes would not be bent when the kink diameter of the tube is 5D. A water-blocking yarn 6 may also be provided in the cable core. The outermost layer of the optical fiber cable is the outer sheath, the outer sheath is made of HDPE, MDPE, LDPE, PA11 or PA12, and the outer sheath has higher strength and rigidity, so as to form an optical fiber cable structure that is hard outside and flexible inside. In order to facilitate opening of a cable, a cable opening string 7 is provided between the cable core and the outer sheath. Table 1 is a parameter list of five embodiments of the present invention, and all the optical fiber densities are more than 3 F/mm².

In the present invention, by means of the preferred moduli of inner and outer coatings of the optical fibers and the preferred secondary coating material for the loose tubes, the diameter of the optical fibers and the diameter of the tubes are reduced to the greatest extent, and meanwhile the optical fibers in the optical fiber cable having excellent transmission performance at a temperature of -30°C to +70°C can also be ensured.

**Table 1**

| Structure parameter | Embodiment 1 | Embodiment 2 | Embodiment 3 | Embodiment 4 | Embodiment 5 |
|---|---|---|---|---|---|
| Optical fiber count | 72 | 144 | 144 | 72 | 144 |
| Optical fiber diameter ( µ m) | 195 | 195 | 195 | 245 | 245 |
| Outer diameter D (mm) of loose tube | 1.15 | 1.55 | 1.65 | 1.42 | 1.95 |
| Inner diameter (mm) of loose tube | 0.85 | 1.25 | 1.25 | 1.12 | 1.60 |
| Kink diameter of loose tube is 5D | No kink | No kink | No kink | No kink | No kink |
| Loose tube material | TPEE | TPEE | TPU | TPEE | TPV |
| elasticity modulus (MPa) of loose tube material | 570MPa | 430MPa | 180MPa | 510MPa | 290MPa |
| Diameter (mm) of strength member | 1.2 | 1.6 | 1.8 | 1.5 | 2.0 |
| Optical fiber ratio | 63.2% | 58.4% | 58.4% | 57.4% | 56.3% |
| Outer diameter (mm) of optical fiber cable | 4.3 | 5.5 | 5.9 | 5.1 | 6.7 |
| Optical fiber density (F/mm²) | 5.0 | 6.1 | 5.3 | 3.5 | 4.1 |
| Working temperature | -30°C to +70°C | -30 °C to +70°C | -30°C to +70°C | -30 °C to +70 °C | -30 °C to +70°C |

## Claims

1. An air-blown optical fiber cable with flexible tubes, the cable comprising: a cable core and an outer sheath (1) that covers the cable core, with the cable core being a stranded cable core, the cable core comprising a central strength member (5) and loose tubes (2) that are stranded on the periphery of the central strength member (5), optical fibers (3) being sheathed in the loose tubes (2), wherein the loose tubes (2) are made of a flexible coating material, and the outermost layer is the outer sheath (1), **characterized in that** the flexible coating material is thermoplastic polyester elastomer, TPEE; an elasticity modulus of the flexible coating material is 570 MPa, optical fiber count is 72; an optical fiber diameter is 195µm; a diameter of the strength member (5) is 1.2mm; the occupying ratio of optical fibers in the loose tubes is 63.2%; an outer diameter of the optical fiber cable is 4.3mm; optical fiber density is 5.0 F/mm²,the outer diameter D of the loose tube (2) is 1.15 mm, and the inner diameter of the loose tube (2) is 0.85 mm, and the loose tubes (2) are filled with a water-blocking materia (4)

2. An air-blown optical fiber cable with flexible tubes, the cable comprising: a cable core and an outer sheath (1) that covers the cable core, with the cable core being a stranded cable core, the cable core comprising a central strength member (5) and loose tubes (2) that are stranded on the periphery of the central strength member (5), optical fibers (3) being sheathed in the loose tubes (2), wherein the loose tubes (2) are made of a flexible coating material, and the outermost layer is the outer sheath (1), **characterized in that** the flexible coating material is thermoplastic polyester elastomer, TPEE; an elasticity modulus of the flexible coating material is 430 MPa, optical fiber count is 144; an optical fiber diameter is 195µm; a diameter of the strength member (5) is 1.6mm; the occupying ratio of optical fibers in the loose tubes is 58.4%; an outer diameter of the optical fiber cable is 5.5mm; optical fiber density is 6.1 F/mm²; the outer diameter D of the loose tube (2) is 1.55 mm, and the inner diameter of the loose tube (2) is 1.25 mm, and the loose tubes (2) are filled with a water-blocking material (4).

3. An air-blown optical fiber cable with flexible tubes, the cable comprising: a cable core and an outer sheath (1) that covers the cable core, with the cable core being a stranded cable core, the cable core comprising a central strength member (5) and loose tubes (2) that are stranded on the periphery of the central strength member (5), optical fibers (3) being sheathed in the loose tubes (2), wherein the loose tubes (2) are made of a flexible coating material, and the outermost layer is the outer sheath (1), **characterized in that** the flexible coating material is a thermoplastic polyurethane elastomer, TPU; an elasticity modulus of the flexible coating material is 180 MPa, optical fiber count is 144; an optical fiber diameter is 195µm; a diameter of the strength member (5) is 1.8mm; the occupying ratio of optical fibers in the loose tubes is 58.4%; an outer diameter of the optical fiber cable is 5.9mm; optical fiber density is 5.3 F/mm²; the outer diameter D of the loose tube (2) is 1.65 mm, and the inner diameter of the loose tube (2) is 1.25 mm, and the loose tubes (2) are filled with a water-blocking material (4).

4. An air-blown optical fiber cable with flexible tubes, the cable comprising: a cable core and an outer sheath (1) that covers the cable core, with the cable core being a stranded cable core, the cable core comprising a central strength member (5) and loose tubes (2) that are stranded on the periphery of the central strength member (5), optical fibers (3) being sheathed in the loose tubes (2), wherein the loose tubes (2) are made of a flexible coating material, and the outermost layer is the outer sheath (1), **characterized in that** the flexible coating material is thermoplastic polyester elastomer, TPEE; an elasticity modulus of the flexible coating material is 510 MPa, optical fiber count is 72; an optical fiber diameter is 245µm; a diameter of the strength member (5) is 1.5mm; the occupying ratio of optical fibers in the loose tubes is 57.4%; an outer diameter of the optical fiber cable is 5.1mm; optical fiber density is 3.5 F/mm²; the outer diameter D of the loose tube (2) is 1.42 mm, and the inner diameter of the loose tube (2) is 1.12 mm, and the loose tubes (2) are filled with a water-blocking material (4).

5. An air-blown optical fiber cable with flexible tubes, the cable comprising: a cable core and an outer sheath (1) that covers the cable core, with the cable core being a stranded cable core, the cable core comprising a central strength member (5) and loose tubes (2) that are stranded on the periphery of the central strength member (5), optical fibers (3) being sheathed in the loose tubes (2), wherein the loose tubes (2) are made of a flexible coating material, and the outermost layer is the outer sheath (1), **characterized in that** the flexible coating material is thermoplastic vulcanized rubber, TPV; an elasticity modulus of the flexible coating material is 290 MPa, optical fiber count is 144; an optical fiber diameter is 245µm; a diameter of the strength member (5) is 2.0mm; the occupying ratio of optical fibers in the loose tubes is 56.3%; an outer diameter of the optical fiber cable is 6.7mm; optical fiber density is 4.1 F/mm²; the outer diameter D of the loose tube (2) is 1.95 mm, and the inner diameter of the loose tube (2) is 1.60 mm, and the loose tubes (2) are filled with a water-blocking material (4).

6. The air-blown optical fiber cable with flexible tubes of any one of claims 1 - 5, **characterized in that** the outer sheath (1) (4). is made of high-density polyethylene, HDPE; medium density polyethylene, MDPE; Low-Density Polyethylene, LDPE; Polyamidel1, PA11; or Polyamide12, PA12.

## Patentansprüche

1. Luftgeblasenes Lichtwellenleiterkabel mit flexiblen Röhrchen, wobei das Kabel Folgendes umfasst: einen Kabelkern und eine äußere Hülle (1), die den Kabelkern bedeckt, wobei der Kabelkern ein verseilter Kabelkern ist, der Kabelkern ein zentrales Festigkeitselement (5) und lose Röhrchen (2) umfasst, die an dem Umfang des zentralen Festigkeitselements (5) verseilt sind, sowie Lichtwellenleiter (3), die in die losen Röhrchen (2) eingehüllt sind, wobei die losen Röhrchen (2) aus einem flexiblen Beschichtungsmaterial bestehen und die äußerste Schicht die äußere Hülle (1) ist, **dadurch gekennzeichnet, dass** das flexible Beschichtungsmaterial ein thermoplastisches Polyesterelastomer, TPEE, ist, ein Elastizitätsmodul des flexiblen Beschichtungsmaterials 570 MPa beträgt, die Anzahl der Lichtwellenleiter 72 beträgt, ein Lichtwellenleiterdurchmesser 195 µm beträgt, ein Durchmesser des Festigkeitselements (5) 1,2 mm beträgt, das Belegungsverhältnis von Lichtwellenleitern in den losen Röhrchen 63,2 % beträgt, ein Außendurchmesser des Lichtwellenleiterkabels 4,3 mm beträgt, die Lichtwellenleiterdichte 5,0 F/mm² beträgt, der Außendurchmesser D des losen Röhrchens (2) 1,15 mm beträgt und der Innendurchmesser des losen Röhrchens (2) 0,85 mm beträgt und die losen Röhrchen (2) mit einem wasserblockierenden Material (4) gefüllt sind.

2. Luftgeblasenes Lichtwellenleiterkabel mit flexiblen Röhrchen, wobei das Kabel Folgendes umfasst: einen Kabelkern und eine äußere Hülle (1), die den Kabelkern bedeckt, wobei der Kabelkern ein verseilter Kabelkern ist, der Kabelkern ein zentrales Festigkeitselement (5) und lose Röhrchen (2) umfasst, die an dem Umfang des zentralen Festigkeitselements (5) verseilt sind, sowie Lichtwellenleiter (3), die in die losen Röhrchen (2) eingehüllt sind, wobei die losen Röhrchen (2) aus einem flexiblen Beschichtungsmaterial bestehen und die äußerste Schicht die äußere Hülle (1) ist, **dadurch gekennzeichnet, dass** das flexible Beschichtungsmaterial ein thermoplastisches Polyesterelastomer, TPEE, ist, ein Elastizitätsmodul des flexiblen Beschichtungsmaterials 430 MPa beträgt, die Anzahl der Lichtwellenleiter 144 beträgt, ein Lichtwellenleiterdurchmesser 195 µm beträgt, ein Durchmesser des Festigkeitselements (5) 1,6 mm beträgt, das Belegungsverhältnis von Lichtwellenleitern in den losen Röhrchen 58,4 % beträgt, ein Außendurchmesser des Lichtwellenleiterkabels 5,5 mm beträgt, die Lichtwellenleiterdichte 6,1 F/mm² beträgt, der Außendurchmesser D des losen Röhrchens (2) 1,55 mm beträgt und der Innendurchmesser des losen Röhrchens (2) 1,25 mm beträgt und die losen Röhrchen (2) mit einem wasserblockierenden Material (4) gefüllt sind.

3. Luftgeblasenes Lichtwellenleiterkabel mit flexiblen Röhrchen, wobei das Kabel Folgendes umfasst: einen Kabelkern und eine äußere Hülle (1), die den Kabelkern bedeckt, wobei der Kabelkern ein verseilter Kabelkern ist, der Kabelkern ein zentrales Festigkeitselement (5) und lose Röhrchen (2) umfasst, die an dem Umfang des zentralen Festigkeitselements (5) verseilt sind, sowie Lichtwellenleiter (3), die in die losen Röhrchen (2) eingehüllt sind, wobei die losen Röhrchen (2) aus einem flexiblen Beschichtungsmaterial bestehen und die äußerste Schicht die äußere Hülle (1) ist, **dadurch gekennzeichnet, dass** das flexible Beschichtungsmaterial ein thermoplastisches Polyurethanelastomer, TPU, ist, ein Elastizitätsmodul des flexiblen Beschichtungsmaterials 180 MPa beträgt, die Anzahl der Lichtwellenleiter 144 beträgt, ein Lichtwellenleiterdurchmesser 195 µm beträgt, ein Durchmesser des Festigkeitselements (5) 1,8 mm beträgt, das Belegungsverhältnis von Lichtwellenleitern in den losen Röhrchen 58,4 % beträgt, ein Außendurchmesser des Lichtwellenleiterkabels 5,9 mm beträgt, die Lichtwellenleiterdichte 5,3 F/mm² beträgt, der Außendurchmesser D des losen Röhrchens (2) 1,65 mm beträgt und der Innendurchmesser des losen Röhrchens (2) 1,25 mm beträgt und die losen Röhrchen (2) mit einem wasserblockierenden Material (4) gefüllt sind.

4. Luftgeblasenes Lichtwellenleiterkabel mit flexiblen Röhrchen, wobei das Kabel Folgendes umfasst: einen Kabelkern und eine äußere Hülle (1), die den Kabelkern bedeckt, wobei der Kabelkern ein verseilter Kabelkern ist, der Kabelkern ein zentrales Festigkeitselement (5) und lose Röhrchen (2) umfasst, die an dem Umfang des zentralen Festigkeitselements (5) verseilt sind, sowie Lichtwellenleiter (3), die in die losen Röhrchen (2) eingehüllt sind, wobei die losen Röhrchen (2) aus einem flexiblen Beschichtungsmaterial bestehen und die äußerste Schicht die äußere Hülle (1) ist, **dadurch gekennzeichnet, dass** das flexible Beschichtungsmaterial ein thermoplastisches Polyesterelastomer, TPEE, ist, ein Elastizitätsmodul des flexiblen Beschichtungsmaterials 510 MPa beträgt, die Anzahl der Lichtwellenleiter 72 beträgt, ein Lichtwellenleiterdurchmesser 245 µm beträgt, ein Durchmesser des Festigkeitselements (5) 1,5 mm beträgt, das Belegungsverhältnis von Lichtwellenleitern in den losen Röhrchen 57,4 % beträgt, ein Außendurchmesser des Lichtwellenleiterkabels 5,1 mm beträgt, die Lichtwellenleiterdichte 3,5 F/mm² beträgt, der Außendurchmesser D des losen Röhrchens (2) 1,42 mm beträgt und der Innendurchmesser des losen Röhrchens (2) 1,12 mm beträgt und die losen Röhrchen (2) mit einem wasserblockierenden Material (4) gefüllt sind.

5. Luftgeblasenes Lichtwellenleiterkabel mit flexiblen Röhrchen, wobei das Kabel Folgendes umfasst: einen Kabelkern und eine äußere Hülle (1), die den Kabelkern bedeckt, wobei der Kabelkern ein verseilter Kabelkern ist, der Kabelkern ein zentrales Festigkeitselement (5) und lose Röhrchen (2) umfasst, die an dem Umfang des zentralen Festigkeitselements (5) verseilt sind, sowie Lichtwellenleiter (3), die in die losen Röhrchen (2) eingehüllt sind, wobei die losen Röhrchen (2) aus einem flexiblen Beschichtungsmaterial bestehen und die äußerste Schicht die äußere Hülle (1) ist, **dadurch gekennzeichnet, dass** das flexible Beschichtungsmaterial thermoplastisches Vulkanisat, TPV, ist, ein Elastizitätsmodul des flexiblen Beschichtungsmaterials 290 MPa beträgt, die Anzahl der Lichtwellenleiter 144 beträgt, ein Lichtwellenleiterdurchmesser 245 µm beträgt, ein Durchmesser des Festigkeitselements (5) 2,0 mm beträgt, das Belegungsverhältnis von Lichtwellenleitern in den losen Röhrchen 56,3 % beträgt, ein Außendurchmesser des Lichtwellenleiterkabels 6,7 mm beträgt, die Lichtwellenleiterdichte 4,1 F/mm² beträgt, der Außendurchmesser D des losen Röhrchens (2) 1,95 mm beträgt und der Innendurchmesser des losen Röhrchens (2) 1,60 mm beträgt und die losen Röhrchen (2) mit einem wasserblockierenden Material (4) gefüllt sind.

6. Luftgeblasenes Lichtwellenleiterkabel mit flexiblen Röhrchen nach einem der Ansprüche 1-5, **dadurch gekennzeichnet, dass** die äußere Hülle (1) aus Polyethylen hoher Dichte, HDPE, Polyethylen mittlerer Dichte, MDPE, Polyethylen niedriger Dichte, LDPE, Polyamid11, PA11, oder Polyamid12, PA12, besteht.

## Revendications

1. Câble à fibre optique soufflé à l'air avec des tubes souples, le câble comprenant : une âme de câble et une gaine externe (1) qui recouvre l'âme de câble, l'âme de câble étant une âme de câble toronnée, l'âme de câble comprenant un élément de renfort central (5) et des tubes détendus (2) qui sont toronnés sur la périphérie de l'élément de renfort central (5), des fibres optiques (3) étant gainées dans les tubes détendus (2), dans lequel les tubes détendus (2) sont réalisés en un matériau de revêtement souple, et la couche la plus externe est la gaine externe (1), **caractérisé en ce que** le matériau de revêtement souple est un élastomère polyester thermoplastique, TPEE ; un module d'élasticité du matériau de revêtement souple est de 570 MPa, le nombre de fibres optiques est de 72 ; un diamètre de fibre optique est de 195 µm ; un diamètre de l'élément de renfort (5) est de 1,2 mm ; le rapport d'occupation des fibres optiques dans les tubes détendus est de 63,2 % ; un diamètre externe du câble à fibre optique est de 4,3 mm ; une densité de fibres optiques est de 5,0 F/mm2 ; le diamètre externe D du tube détendu (2) est de 1,15 mm, et le diamètre interne du tube détendu (2) est de 0,85 mm, et les tubes détendus (2) sont remplis d'un matériau bloquant l'eau (4).

2. Câble à fibre optique soufflé à l'air avec des tubes souples, le câble comprenant : une âme de câble et une gaine externe (1) qui recouvre l'âme de câble, l'âme de câble étant une âme de câble toronnée, l'âme de câble comprenant un élément de renfort central (5) et des tubes détendus (2) qui sont toronnés sur la périphérie de l'élément de renfort central (5), des fibres optiques (3) étant gainées dans les tubes détendus (2), dans lequel les tubes détendus (2) sont réalisés en un matériau de revêtement souple, et la couche la plus externe est la gaine externe (1), **caractérisé en ce que** le matériau de revêtement souple est un élastomère polyester thermoplastique, TPEE ; un module d'élasticité du matériau de revêtement souple est de 430 MPa, le nombre de fibres optiques est de 144 ; un diamètre de fibre optique est de 195 µm ; un diamètre de l'élément de renfort (5) est de 1,6 mm ; le rapport d'occupation des fibres optiques dans les tubes détendus est de 58,4 % ; un diamètre externe du câble à fibre optique est de 5,5 mm ; une densité de fibres optiques est de 6,1 F/mm2 ; le diamètre externe D du tube détendu (2) est de 1,55 mm, et le diamètre interne du tube détendu (2) est de 1,25 mm, et les tubes détendus (2) sont remplis d'un matériau bloquant l'eau (4).

3. Câble à fibre optique soufflé à l'air avec des tubes souples, le câble comprenant : une âme de câble et une gaine externe (1) qui recouvre l'âme de câble, l'âme de câble étant une âme de câble toronnée, l'âme de câble comprenant un élément de renfort central (5) et des tubes détendus (2) qui sont toronnés sur la périphérie de l'élément de renfort central (5), des fibres optiques (3) étant gainées dans les tubes détendus (2), dans lequel les tubes détendus (2) sont réalisés en un matériau de revêtement souple, et la couche la plus externe est la gaine externe (1), **caractérisé en ce que** le matériau de revêtement souple est un élastomère polyuréthane thermoplastique, TPU ; un module d'élasticité du matériau de revêtement souple est de 180 MPa, le nombre de fibres optiques est de 144 ; un diamètre de fibre optique est de 195 µm ; un diamètre de l'élément de renfort (5) est de 1,8 mm ; le rapport d'occupation des fibres optiques dans les tubes détendus est de 58,4 % ; un diamètre externe du câble à fibre optique est de 5,9 mm ; une densité de fibres optiques est de 5,3 F/mm2 ; le diamètre externe D du tube détendu (2) est de 1,65 mm, et le diamètre interne du tube détendu (2) est de 1,25 mm, et les tubes détendus (2) sont remplis d'un matériau bloquant l'eau (4).

4. Câble à fibre optique soufflé à l'air avec des tubes souples, le câble comprenant : une âme de câble et une gaine externe (1) qui recouvre l'âme de câble, l'âme de câble étant une âme de câble toronnée, l'âme de câble comprenant un élément de renfort central (5) et des tubes détendus (2) qui sont toronnés sur la périphérie de l'élément de renfort central (5), des fibres optiques (3) étant gainées dans les tubes détendus (2), dans lequel les tubes détendus (2) sont réalisés en un matériau de revêtement souple, et la couche la plus externe est la gaine externe (1), **caractérisé en ce que** le matériau de revêtement souple est un élastomère polyester thermoplastique, TPEE ; un module d'élasticité du matériau de revêtement souple est de 510 MPa, le nombre de fibres optiques est de 72 ; un diamètre de fibre optique est de 245 µm ; un diamètre de l'élément de renfort (5) est de 1,5 mm ; le rapport d'occupation des fibres optiques dans les tubes détendus est de 57,4 % ; un diamètre externe du câble à fibre optique est de 5,1 mm ; une densité de fibres optiques est de 3,5 F/mm2 ; le diamètre externe D du tube détendu (2) est de 1,42 mm, et le diamètre interne du tube détendu (2) est de 1,12 mm, et les tubes détendus (2) sont remplis d'un matériau bloquant l'eau (4).

5. Câble à fibre optique soufflé à l'air avec des tubes souples, le câble comprenant : une âme de câble et une gaine externe (1) qui recouvre l'âme de câble, l'âme de câble étant une âme de câble toronnée, l'âme de câble comprenant un élément de renfort central (5) et des tubes détendus (2) qui sont toronnés sur la périphérie de l'élément de renfort central (5), des fibres optiques (3) étant gainées dans les tubes détendus (2), dans lequel les tubes détendus (2) sont réalisés en un matériau de revêtement souple, et la couche la plus externe est la gaine externe (1), **caractérisé en ce que** le matériau de revêtement souple est un caoutchouc vulcanisé thermoplastique, TPV ; un module d'élasticité du matériau de revêtement souple est de 290 MPa, le nombre de fibres optiques est de 144 ; un diamètre de fibre optique est de 245 µm ; un diamètre de l'élément de renfort (5) est de 2,0 mm ; le rapport d'occupation des fibres optiques dans les tubes détendus est de 56,3 % ; un diamètre externe du câble à fibre optique est de 6,7 mm ; une densité de fibres optiques est de 4,1 F/mm² ; le diamètre externe D du tube détendu (2) est de 1,95 mm, et le diamètre interne du tube détendu (2) est de 1,60 mm, et les tubes détendus (2) sont remplis d'un matériau bloquant l'eau (4).

6. Câble à fibre optique soufflé à l'air avec des tubes souples selon l'une quelconque des revendications 1-5, **caractérisé en ce que** la gaine externe (1) est réalisée en polyéthylène haute densité, HDPE ; en polyéthylène moyenne densité, MDPE ; en polyéthylène basse densité, LDPE ; en Polyamide11, PA11 ; ou en Polyamide12, PA12.
